# EUROPÄISCHE PATENTANMELDUNG

(11) **EP 1 044 656 A1**
(43) Veröffentlichungstag der Anmeldung: **18.10.2000**
(21) Anmeldenummer: 00104316.5
(22) Anmeldetag: 02.03.2000
(51) Int. Cl.: A61C 1/14

(54) **Einrichtung zum Verbinden einer dentalen Arbeitsspitze mit einem Antriebsteil**

(30) Priorität: 11.04.1999 DE 19916159
(71) Anmelder: Dürr Dental GmbH & Co. KG, 74321 Bietigheim-Bissingen (DE); Hahn, Rainer, Dr., 72074 Tübingen (DE)
(72) Erfinder: Hahn, Rainer, 72074 Tübingen (DE); Grotz, Uwe, 74369 Löchgau (DE)
(74) Vertreter: Ostertag, Reinhard

(57) **Zusammenfassung**

Eine Einrichtung zum Verbindung einer dentalen Arbeitsspitze (26) mit einem vorzugsweise mit hoher Frequenz laufenden Antriebsteil (18) umfaßt einen die Arbeitsspitze (26) tragenden zylindrischen Spannschaft und eine zu dieesem passende zylindrische Spannzange (20). Der Durchmesser des Spannschaftes (24) beträgt bei zähen Materialien 1,3 bis 1,5, bei spröden Materalien 1,8 bis 2,2 mm. Die axiale Abmessung der Schaftaufnahme (40) der Spannzange (20) beträgt das 1,5 bis 2,5-Fache ihres Durchmessers.

## Beschreibung

Die Erfindung betrifft eine Einrichtung zum Verbinden einer dentalen Arbeitsspitze mit einem vorzugsweise mit hoher Frequenz laufenden Antriebsteil gemäß dem Oberbegriff des Anspruches 1.

Unter hoher Frequenz wird in der vorliegenden Beschreibung und den Ansprüchen eine Frequenz im Ultraschallbereich verstanden. Die Erfindung ist aber auch bei mit Hörfrequenzen oder Infraschall-Frequenzen laufenden Antriebsteilen verwendbar.

Verbindungseinrichtungen der oben angesprochenen Art finden sich an Ultraschallhandstücken, wie sie zur Behandlung von Hartgewebe im dentalen Bereich verwendet werden. Üblicherweise ist das Werkzeug mit einem Gewinde versehen, welches in eine Gewindebohrung am Ende des Antriebsteiles eingeschraubt wird.

Derartige Gewinde bereiten im Langzeitbetrieb dentaler Ultraschallhandstücke aber Probleme, da das Gewinde mit seinen scharfen Kanten Bereiche hoher mechanischer Spannung darstellt, an denen im Dauerbetrieb Brüche auftreten können. Dem kann man zwar dadurch begegnen, daß man die Gewinde in axialer und radialer Richtung vergrößert, hierdurch wird aber die Handlichkeit des Gerätes verschlechtert. Auch beeinflussen derart großbauende Verbindungseinrichtungen das Schwingungsverhalten des Gesamtsystemes nachteilig.

Durch die vorliegende Erfindung soll daher eine Verbindungseinrichtung gemäß dem Oberbegriff des Anspruches 1 so weitergebildet werden, daß sie bei kompakter Bauweise auch im Langzeitbetrieb eine Arbeitsspitze zuverlässig mit einem vorzugsweise mit hoher Frequenz laufenden Antriebsteil verbinden kann.

Es wurde herausgefunden, daß man dadurch, daß man den gespannten Schaftabschnitt des Werkzeuges glatt ausbildet und ihm einen bestimmten Durchmesser gibt, der den Eigenschaften des Materiales, aus welchem das Werkzeug besteht, grob Rechnung trägt, überraschenderweise eine sichere Antriebsverbindung und hohe Langzeit-Standfestigkeit der Verbindungseinrichtung miteinander vereinen kann. Die Spannzange kann so klein gebaut werden, daß man auch in schlecht zugänglichen Bereichen des Mundes eines Patienten gut arbeiten kann. Sie umfaßt nur so wenig Masse, daß das Schwingungsverhalten des Gesamtsystems, das durch den Schallantrieb (Ultraschall, hörbarer Schall, Infraschall), eine Sonotrode, ggf. ein Umlenkkörper für die Schallenergie, die Spannzange und das Werkzeug gebildet ist, für die Durchführung dentaler Arbeiten gut geeignet ist.

Dadurch, daß bei der erfindungsgemäßen Verbindungseinrichtung zylindrische zusammenarbeitende Spannflächen auf dem Werkzeug und in der Spannzange verwendet werden, erhält man als weiteren Vorteil, daß man dann, wenn die Arbeitsspitzen keine Rotationssymmetrie aufweisen, z.B. Arbeitsspitzen, die eine zu Golfschlägern ähnliche Geometrie haben oder gekrümmte Arbeitsspitzen zum Behandeln von Interradikulärräumen, das Werkzeug in der Spannzange jeweils so gedreht werden kann, wie dies im Moment für ein ergonomisches Arbeiten des Zahnarztes am günstigsten ist. Diese Winkeleinstellung der Werkzeuges kann einfach auch mit dem Fortschreiten der Arbeit des Zahnarztes nachgestellt werden.

Das Einsetzen des Werkzeuges in die Spannzange kann ohne Aufwenden besonderer Aufmerksamkeit rasch und zuverlässig erfolgen.

Vorteilhafte Weiterbildungen der Erfindung sind in Unteransprüchen angegeben.

Nachstehend wird die Erfindung anhand eines Ausführungsbeispieles unter Bezugnahme auf die Zeichung näher erläutert. In dieser zeigen:
- Figur 1:: eine seitliche Ansicht eines dentalen Ultraschall handstückes;
- Figur 2:: einen vergrößerten longitudinalen Mittenschnitt durch den dem Werkzeug benachbarten Endabschnitt des Ultraschallhandstückes;
- Figur 3:: einen nochmal vergrößerten Schnitt durch eine Spannzange für das Werkzeug des Ultraschallhandstückes;

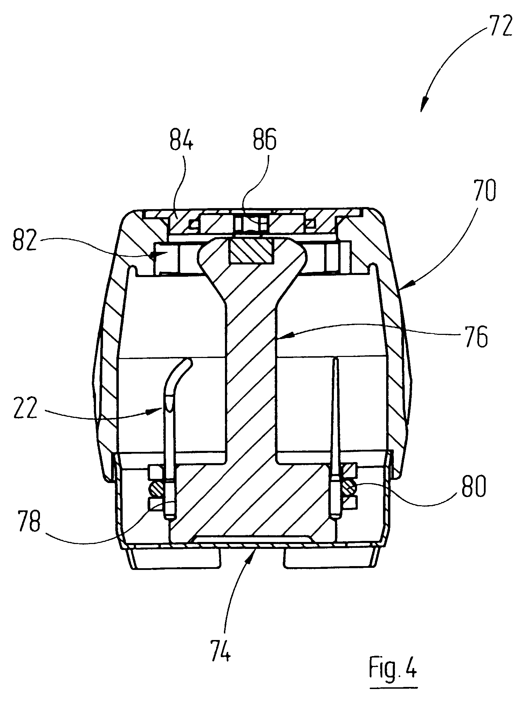

- Figur 4:: einen axialen Schnitt durch ein Werkzeug zum Betätigen der Spannzange des Ultraschallhandstückes; und
- Figuren 5 bis 6:: seitliche Ansichten verschiedener Werkzeuge, die in dem Ultraschallhandstück nach den Figuren 1 bis 3 verwendbar sind.

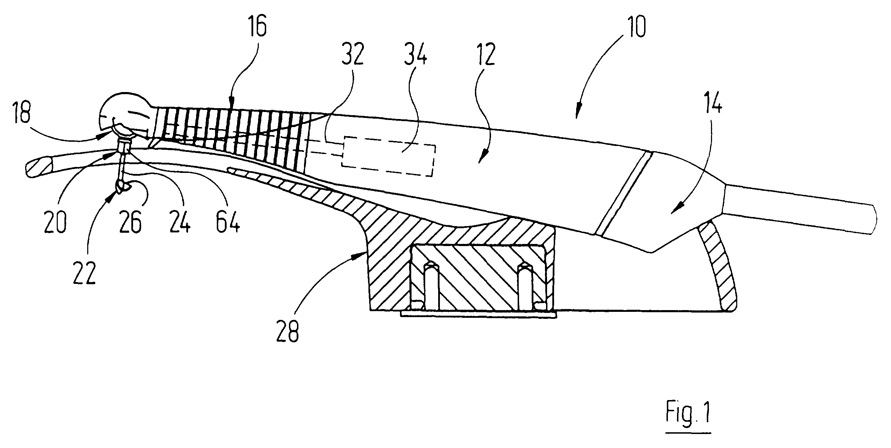

In Figur 1 ist ein Ultraschallhandstück für dentale Zwecke insgesamt mit 10 bezeichnet. Es hat ein Gehäusehauptteil 12, ein absteckbares hinteres Gehäuseteil 14 und ein abnehmbares vorderes Gehäuseteil 16. Letzteres überdeckt einen Umlenkring 18, an welchem über eine Spannzange 20 ein Werkzeug 22 lösbar befestigt ist. Das Werkzeug 22 hat einen mit der Spannzange zusammenarbeitenden Schaft 24 und eine ähnlich einem Golfschläger ausgebildete Arbeitsspitze 26. Das Ultraschallhandstück 10 ist auf einer Ablage 28 abgelegt dargestellt.

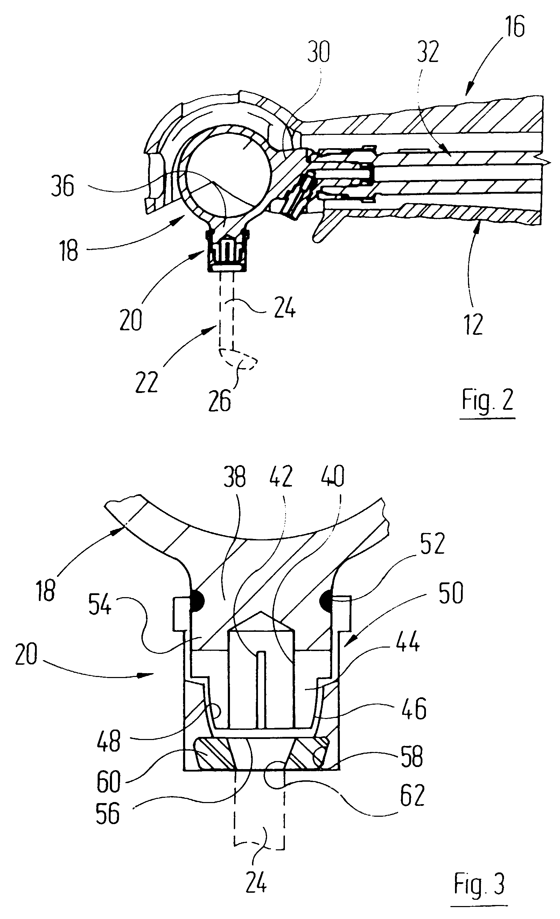

Wie aus Figur 2 ersichtlich hat der Umlenkring 18 einen Anschlußabschnitt 30, der mit dem Ende einer Sonotrode 32 verbunden ist. Diese ist am in der Zeichnung rechts gelegenen Ende mit einem im Inneren des Gehäusehauptteiles 12 angeordneten Ultraschallerzeuger 34 verbunden, der in Figur 1 schematisch angedeutet ist.

Der Umlenkring 18 hat ferner einen zweiten Anschlußabschnitt 36, der die Spannzange 20 trägt.

Wie aus Figur 3 ersichtlich, hat der Anschlußabschnitt 36 einen Zapfenabschnitt 38, in welchem eine Aufnahmebohrung 40 ausgebildet ist. Im Zapfenabschnitt 38 sind vier in Umfangsrichtung gleich verteilte Schlitze 42 vorgesehen, so daß man vier in Umfangsrichtung verteilte federnde Spannarme 44 erhält. Diese sind am freien radial äußeren Ende mit Abschrägungen 46 versehen.

Die Abschrägungen 46 arbeiten mit einer entsprechend schräg gestellten Spannfläche 48 zusammen, die auf einem becherförmigen Spannteil 50 vorgesehen ist. Letzteres hat am in Figur 3 oberen Ende ein Gewinde 52, welches auf einem passenden Außengewinde 54 des Zapfenabschnittes 38 läuft. Durch Verschrauben des Spannteiles 50 auf dem Außengewinde 54 des Zapfenabschnittes 38 kann man somit die Spannarme 44 radial nach innen drücken (Aufschrauben) bzw. wieder freigeben (teilweises Abschrauben des Spannteiles).

In seiner Stirnfläche ist das Spannteil 50 mit einer hinterdrehten Gegenbohrung 56 versehen, welche eine sich zum freien Ende hin verjüngende kegelstumpfförmige Umfangswand 58 aufweist. In der Gegenbohrung 56 ist ein Dichtring 60 angeordnet, der in unverformtem Zustand quadratischen Querschnitt aufweist. Der Dichtring 60 ist aus verhältnismäßig hartem elastischen Material hergestellt, z.B. aus PTFE. Durch Einsetzen des Dichtringes 60 in die Gegenbohrung 56 wird Zusammenarbeiten der Außenfläche des Dichtringes 60 mit der Umfangswand 58 der Querschnitt des Dichtringes tordiert und erhält im wesentlichen eine parallelogrammähnliche Geometrie, wie aus Figur 3 ersichtlich.

Auf diese Weise erhält man eine Dichtkante 62 beim unteren inneren Ende des Dichtringes 60, die etwas kleineren Durchmesser hat als der gestrichelt angedeuteten Schaft 24 eines Werkzeuges 22 und mit der Schaftaußenfläche dicht abstreifend zusammenarbeiten kann. Auf diese Weise wird verhindert, daß etwa auf der Umfangsfläche des Schaftes 24 befindliche Flüssigkeit ins Innere der Spannzange 20 mitgeschleppt wird, wo sie den Reibschluß zwischen der Schaftaußenfläche und den Spannflächen der Spannarme 44 negativ beeinflussen könnte.

Wie aus Figur 3 ersichtlich, ist die axiale Abmessung der effektiven Spannfläche, welche sich durch den Überlapp der Außenfläche des Schaftes 24 mit den Innenflächen der Spannarme 44 ergibt, etwa gleich dem Doppelten des Durchmessers der Aufnahmebohrung 40. Auch Verhältnisse zwischen Axialabmessung und Durchmesser der Aufnahmebohrung 40 im Bereich von 1,5 und 2,5 führen zu guten Ergebnissen.

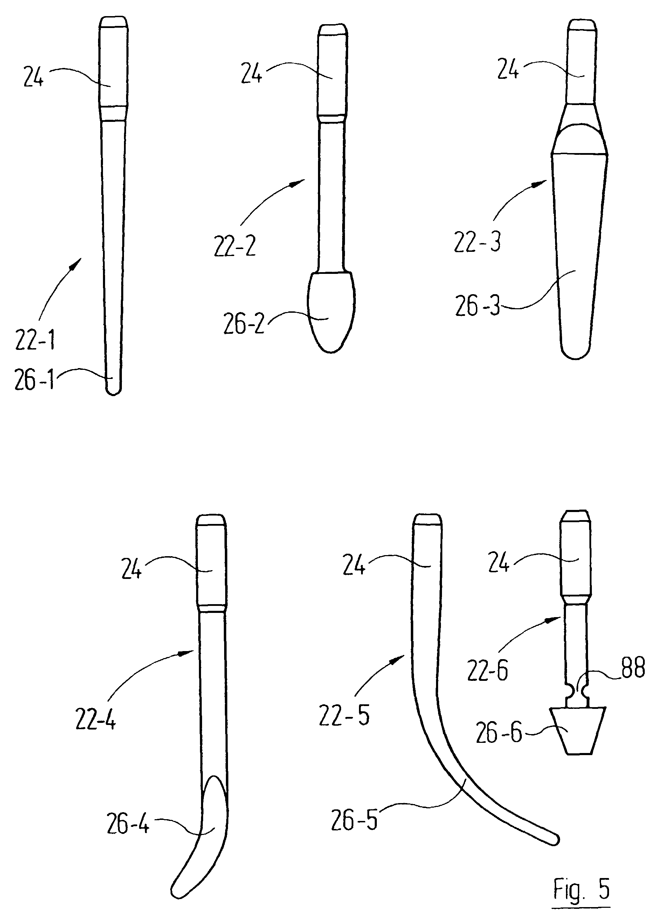

Um die Werkzeuge 22 rasch tauschen zu können oder in ihrer Winkeleinstellung rasch ändern zu können, ist das Spannteil 50 des Spannfutters 20 mit einer Sechskantfläche 64 (vergleiche Figur 1) versehen. An dieser kann ein Spannwerkzeug (vergleiche Figur 5) eingesetzt werden.

Dieses ist durch ein becherförmiges Deckelteil 70 eines autoklavierbaren Vorratsbehälters 72 für Werkzeuge 22 gebildet. Das Deckelteil 70 sitzt auf einem verglichen mit ihm axial kurzen becherförmigen unteren Behälterteil 74, und im Inneren des Vorratsbehälters 72 ist ein Instrumententräger 76 angeordnet, der Ausnehmungen 78 aufweist, in denen die Schäfte 24 der Werkzeuge 22 Aufnahme finden. Mit den Ausnehmungen 78 steht eine Umfangsnut des Instrumententrägers 76 in Verbindung, in welcher ein O-Ring 80 Aufnahme findet, der die Werkzeuge 22 so im Reibschluß im Instrumententräger 76 hält. In das Deckelteil ist eine Ratscheneinrichtung 82 integriert, die so arbeitet, daß das Spannteil 50 in Spannrichtung unter Drehmomentbegrenzung angezogen werden kann, während das auf das Deckelteil 70 ausgeübte Drehmoment in Richtung des Lösens des Spannteiles 60 unbegrenzt übertragen wird.

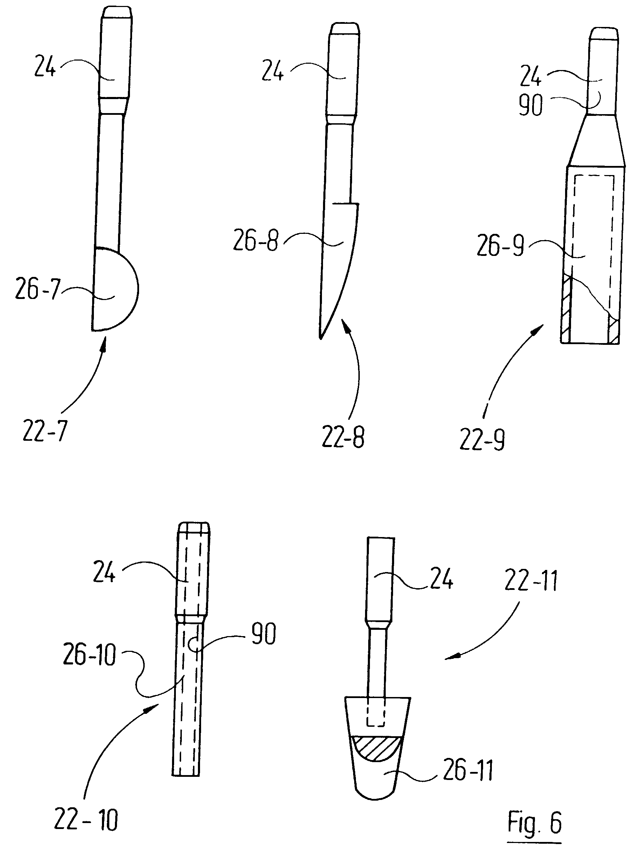

In die Spannzange 20 können weitere, geometrisch anders gestaltete Werkzeuge eingesetzt werden, wie sie in Figur 5 und 6 dargestellt sind.

Diese Werkstücke haben jeweils einen mit der Spannzange 20 zusammenarbeitenden Schaft 24 und eine Arbeitsspitze 26, wie für das Werkzeug 22 schon beschrieben.

Bei dem in Figur 5 gezeigten Werkzeug 22-1 hat man eine gerade Arbeitsspitze 26-1. Dieses Werkzeug ist für Buccal-, Lingual- oder Pallatinal-Flächen der Zähne oder Zahnwurzel bestimmt und wird im Zuge der Paradontal-Behandlung oder Zahnreinigung oder der Periimplantitis-Therapie bzw. der Paradontalprophylaxe eingesetzt.

Das Werkzeug 22-2 hat eine knospenförmige Arbeitsspitze 26-2 und wird insbesondere zur Reinigung von konkaven Oberflächenbereichen von Zähnen verwendet.

Das Werzeug 22-3 hat eine plättchenförmige Arbeitsspitze 26-3 und dient zur Reinigung bzw. Behandlung oder Prophylaxe von approximalen Zahnoberflächen im Zuge der Zahnreinigung, der Paradontal-Behandlung oder der Paradontalprophylaxe.

Das Werkzeug 22-4 hat eine kürettenförmige Arbeitsspitze 26-4. Es wird bei der Behandlung der approximalen Wurzeloberflächen im Zuge der Paradontal-Behandlung oder Paradontal-Prophylaxe eingesetzt.

Das Werkzeug 22-5 hat eine kontinuierlich gebogene Arbeisspitze 26-5 und wird für Furkationsbereiche der Zähne bzw. Wurzeln bei der Paradontal-Behandlung oder der Paradontal-Prophylaxe verwendet.

Ein Werkzeug 22-6 hat einen Schaft 24, welcher über eine Soll-Bruchstelle 88 mit einer Arbeitsspitze 26-6 verbunden ist. Das Werkzeug 22-6 ist aus Keramikmaterial hergestellt und dient dazu, in Zahnhartgewebe eine Kavität zu erzeugen, die zur Geometrie der Arbeitsspitze 26-6 komplementär ist. Auf diese Weise kann man nach Brechen der Soll-Bruchstelle 66 vom Schaft 24 die Arbeitsspitze 26 zugleich als Insert verwenden, welcher in der durch die Arbeitsspitze selbst erzeugten Kavität formschlüssig einzementiert werden kann. Nach einer Oberflächenbehandlung zur Versäuberung der Soll-Bruchstelle und zur Anpassung der nach Eingliederung freien Oberfläche der Arbeitsspitze 26-6 an die Fläche des Gegenzahnes ist dann der betrachtete Zahn fertig versorgt.

In Abwandlung kann man das Werkzeug 22-6 auch ohne Sollbruchstelle ausbilden. Der Schaft 24 wird dann nach dem Eingliedern der Arbeitsspitze 26-6 mit einer Schleifscheibe abgetrennt.

Wegen der Sprödigkeit des Keramikmateriales beträgt der Durchmesser des Schaftes 24 2,0 mm.

Weitere Werkzeuge sind in Figur 6 gezeigt:

Ein Werkzeug 22-7 hat eine halbkugelige Arbeitsspitze 26-7. Es dient zur mikroinvasiven Zahnpräparation und zum Finieren.

Ein für die gleiche Anwendung bestimmtes weiteres Werkzeug 22-8 hat eine halb-flammenförmige Arbeitsspitze 26-8.

Ein weiteres Werkzeug 22-9 hat eine hohlzylindrische Arbeitsspitze 26-9. Es besteht üblicherweise aus Metall und dient der Zahnpäparation.

Ein Werkzeug 22-10 ähnelt dem Werkzeug 22-9, nur ist im Inneren des Schaftes ein Fluidkanal 90 ausgebildet, über den die Arbeitsspitze 26-10 mit einem Arbeitsfluid, z.B. einer wässrigen Suspension von abrasiven Partikeln beaufschlagt werden kann.

In Abwandlung kann man den Arbeitsspitzen 26-9 und 26-10 auch ovale Querschnittsform geben.

Ein Werkzeug 22-11 hat einen aus Metall gefertigten Schaft 24, der auf eine Länge von 1 bis 2 mm in die aus Keramik gefertigte Arbeitsspitze 26-11 eingelassen ist (im Preßsitz eingeschrumpft, eingebrannt oder eingeklebt). Die Arbeitsspitze 26-11 hat einen Querschnitt, der einem Trapez mit aufgesetztem Kreisabschnitt entspricht. Die Arbeitsspitze 26-11 erzeugt in einem Zahn (ggf. nach konventioneller Vorpräparierung des Zahns) eine zu ihr komplementäre Kavität und kann danach als paßgenaues Insert verwendet werden. Keramische Materialien haben dabei den Vorteil, daß unter Ultraschallpräparation mit einer abrasiven Suspension eine Formanpassung des konfektionierten Keramikteils an die vorpräparierte Kavität erfolgt.

Die Materialien, aus denen der Schaft 24 (bzw. ggf. das ganze Werkzeug) 22 hergestellt sind, kann man grob in zähe Materialien und spröde Materialien unterteilen.

Zu den zähen Materialien zählen gefüllte, partikelverstärkte und ungefüllte Kunststoffmaterialien, Kunststoff/Faser-Verbundmaterialien und Metalle, aber auch bruchzähe Nichtoxid-Keramiken (z.B. SiN-Keramiken) und auch bruchzähe Polymerkeramiken, welche z.B. durch pyrolytische Schritte umfassende Verfahren aus polymeren Vorprodukten hergestellt sind.

Spröde Materialien sind Silikat-Keramiken, Gläser, Glaskeramiken, Porzellanwerkstoffe und verwandte Materialien.

Der Durchmesser des Schaftes 24 beträgt für einen Schaft aus zähem Material bevorzugt 1,4 mm. Auch Durchmesser des Schaftes im Bereich von 1,3 bis 1,5 mm führen insofern zu guten Ergebnissen, als der Schaft 24 von der Spannzange 20 sicher ergriffen wird und die im Betrieb auf den Schaft einwirkenden Spannkräfte zusammen mit den auf das Werkzeug beim Arbeiten ausgeübten Biegemomenten zu keinem Bruch führen.

Für Werkzeuge aus spröden Materialien können neben einem bevorzugten Schaftdurchmesser von 2,0 mm auch Schaftdurchmesser im Bereich von 1,8 mm bis 2,2 mm mit Erfolg verwendet werden.

## Patentansprüche

1. Einrichtung zum Verbinden einer dentalen Arbeitsspitze (26) mit einem vorzugsweise mit hoher Frequenz laufenden Antriebsteil (18), dadurch gekennzeichnet, daß die Arbeitsspitze (26) von einem zylindrischen Spannschaft (24) getragen ist, welcher für zähes Werkzeugmaterial einen Durchmesser von 1,3 bis 1,5 mm und für sprödes Werkzeugmaterial einen Durchmesser von 1,8 bis 2,2 mm aufweist, und daß der Spannschaft (24) in einer zu ihm passenden zylindrischen Spannzange (20) gespannt ist.

2. Einrichtung nach Anspruch 1, dadurch gekennzeichnet, daß der Durchmesser des Spannschaftes (24) für zähes Material etwa 1,4 mm, für sprödes Material etwa 2,0 mm beträgt.

3. Einrichtung nach Anspruch 1 oder 2, dadurch gekennzeichnet, daß die axiale Abmessung der Werkzeugaufnahme (40) der Spannzange (20) das 1,5 bis 2,5-Fache des Durchmesser der Werkzeugaufnahme (40) beträgt.

4. Einrichtung nach Anspruch 3, dadurch gekennzeichnet, daß die axiale Abmessung der Werkzeugaufnahme (40) etwa das zweifache ihres Durchmessers beträgt.

5. Einrichtung nach einem der Ansprüche 2 bis 4, dadurch gekennzeichnet, daß die Spannzange (20) ein Spannteil (50) aufweist, welches über eine geneigte Spannfläche (48) mit entsprechend geneigten Spannflächen (46) von Spannarmen (44) der Spannzange (20) zusammenarbeitet und über eine Gewindeverbindung (52, 54) mit einem Basisabschnitt (36) der Spannzange (20) zusammenarbeitet.

6. Einrichtung nach Anspruch 5, dadurch gekennzeichnet, daß das Spannteil (50) außenliegende Formschlußmittel (66) aufweist.

7. Einrichtung nach Anspruch 5, dadurch gekennzeichnet, daß ein Werkzeug zum Lösen und Festziehen des Spannteiles (50) durch ein Deckelteil (70) eines Werkzeug-Aufbewahrungsbehälters (72) gebildet ist, welches mit zu den Formschlußmitteln (66) des Spannteiles (50) passenden Formschlußmittel (86) versehen ist.

8. Einrichtung nach Anspruch 7, dadurch gekennzeichnet, daß die Formschlußmittel (86) des Deckelteiles (70) über eine Ratscheneinrichtung (82) mit dem Deckelteil (70) gekoppelt sind.

9. Einrichtung nach einem der Ansprüche 1 bis 7, dadurch gekennzeichnet, daß der Spannschaft (24) aus einem zähen Material gefertigt ist und die Arbeitsspitze (26) aus einem spröden Material gefertigt ist.

10. Einrichtung nach Anspruch 9, dadurch gekennzeichnet, daß der Spannschaft (24) in die Arbeitsspitze (26) eingelassen ist und dort durch Einschrumpfen, Einbrennen oder Einkleben festgelegt ist.

11. Einrichtung nach einem der Ansprüche 1 bis 10, dadurch gekennzeichnet, daß die Arbeitsspitze (26-9; 26-10) hohl ist.

12. Einrichtung nach einem der Ansprüche 1 bis 11, gekennzeichnet durch einen in der Arbeitsspitze (26-10) ausmündenden Fluidkanal (88).

13. Einrichtung nach einem der Ansprüche 1 bis 12, dadurch geknnzeichnet, daß die Arbeitsspitze (26) nicht zur Achse des Spannschaftes (24) rotationssymmetrisch ist.

14. Einrichtung nach Anspruch 13, dadurch gekennzeichnet, daß die Arbeitsspitze (26) bezüglich der Achse des Spannschaftes (24) außermittig angeordnet ist.
